# EUROPEAN PATENT APPLICATION

(11) **EP 2 192 329 A1**
(43) Date of publication of application: **02.06.2010**
(21) Application number: 09712418.4
(22) Date of filing: 04.02.2009
(51) Int. Cl.: F16H 1/36, B64C 27/12

(54) **PLANETARY MECHANISM**

(30) Priority: 19.02.2008 JP 2008037620
(71) Applicant: Mitsubishi Heavy Industries, Ltd., Tokyo 108-8215 (JP)
(72) Inventor: NAKAYAMA, Shuichi, Nagoya-shi Aichi 455-8515 (JP); SHIMOYAMA, Kunimitsu, Nagoya-shi Aichi 455-8515 (JP); SUZUKI, Kazutaka, Ritto-shi Shiga 520-3080 (JP); ONO, Yasuhiro, Komaki-shi Aichi 485-8561 (JP); SAKAI, Kenji, Ritto-shi Shiga 520-3080 (JP)
(74) Representative: Bongiovanni, Simone
(86) International application number: PCT/JP2009/051847
(87) International publication number: WO 2009/104472

(57) **Abstract**

A planetary gear system contains: a sun gear as an input; a fixed ring gear; a planetary career as an output, a first planetary gear supported by the planetary career and engaging the sun gear; and a second planetary gear supported by the planetary career and engaging the ring gear. A first spin axis of the first planetary gear is arranged closer to a planetary career rotation axis of the planetary career than a second spin axis of the second planetary gear. Torque is transmitted from the first planetary gear to the second planetary gear.

## Description

### Technical Field

The present invention relates to a planetary gear system.

### Background Art

A planetary gear system is often employed as a transmission for converting a rotation speed or torque of an output shaft of a motor into a necessary rotation speed or torque, in a machine tool and transportation means such as a car and a helicopter.

In a helicopter, although a rotation speed of a gas turbine engine is several tens of thousands rpm, a rotation speed of a main rotor is several hundreds rpm. As for a planetary gear system for the helicopter, it is important to attain a large reduction gear ratio while suppressing the increase in weight.

U.S. Patent No.5472386 discloses a planetary gear system for a helicopter. The planetary gear system contains: a sun gear; a first planetary gear engaging the sun gear; a second planetary gear; a shaft supporting the first planetary gear and the second planetary gear; and a fixed ring gear engaging the second planetary gear.

U.S. Patent No.4856377 discloses a planetary gear system for a gas turbine engine. In the planetary gear system, a carrier contains a first gear and a second gear. A sun gear causes the first gear to rotate, and the first gear causes the second gear to rotate. As a result, the carrier rotates in a direction opposite to that of the sun gear.

### Disclosure of Invention

An object of the present invention is to provide a planetary gear system that can attain a large reduction gear ratio while suppressing the increase in weight.

A planetary gear system of the present invention contains: a sun gear as an input; a fixed ring gear; a planetary career as an output; a first planetary gear supported by the planetary career and engaging the sun gear; and a second planetary gear supported by the planetary career and engaging the ring gear. A first spin axis of the first planetary gear is arranged closer to a planetary career rotation axis of the planetary career than a second spin axis of the second planetary gear. Torque is transmitted from the first planetary gear to the second planetary gear.

It is preferred that torque is transmitted from the first planetary gear to the second planetary gear such that a direction of torque around the planetary career rotation axis, which is applied from the sun gear through the first planetary gear to the planetary career, is same as a direction of torque around the planetary career rotation axis, which is applied from the ring gear through the second planetary gear to the planetary career. The ring gear is an internal gear.

The planetary gear system of the present invention is preferred to further contain a third planetary gear supported by the planetary career and engaging the first planetary gear and the second planetary gear.

It is preferred that a pitch circle diameter of the first planetary gear is smaller than a pitch circle diameter of the third planetary gear.

It is preferred that a pitch circle diameter of the first planetary gear is smaller than a pitch circle diameter of the second planetary gear.

It is preferred that a third spin axis of the third planetary gear, the first spin axis, the second spin axis, and a sun gear rotation axis of the sun gear are arranged in an same plane. A center axis of the ring gear is arranged coaxially with the sun gear rotation axis.

The planetary gear system of the present invention is preferred to further contain a fourth planetary gear supported by the planetary career and engaging the ring gear. Torque is transmitted from the first planetary gear to the fourth planetary gear.

The planetary gear system of the present invention is preferred to further contain: a shaft rotatably supported by the planetary career; and a third planetary gear. The second planetary gear and the third planetary gear are coupled to the shaft. Torque is transmitted from the first planetary gear to the second planetary gear through the third planetary gear. A pitch circle diameter of the second planetary gear is smaller than a pitch circle diameter of the third planetary gear.

The planetary gear system of the present invention is preferred to further contain: a shaft rotatably supported by the planetary career; and a third planetary gear. The first planetary gear and the third planetary gear are coupled to the shaft. Torque is transmitted from the first planetary gear to the second planetary gear through the third planetary gear. A pitch circle diameter of the third planetary gear is smaller than a pitch circle diameter of the first planetary gear.

The planetary gear system of the present invention is preferred to further contain: a shaft rotatably supported by the planetary career; a third planetary gear coupled to the shaft; and a fourth planetary gear coupled to the shaft. Torque is transmitted from the first planetary gear to the second planetary gear through the third planetary gear and the fourth planetary gear in an order of the third planetary gear and the fourth planetary gear. A pitch circle diameter of the fourth planetary gear is smaller than a pitch circle diameter of the third planetary gear.

The planetary gear system of the present invention is preferred to further contain a third planetary gear supported by the planetary career and engaging the first planetary gear. Torque is transmitted from the first planetary gear to the second planetary gear through the third planetary gear. A pitch circle diameter of the first planetary gear is smaller than a pitch circle diameter of the third planetary gear.

The planetary gear system of the present invention is preferred to further contain: a shaft rotatably supported by the planetary career; and a third planetary gear. The second planetary gear and the third planetary gear are coupled to the shaft. Torque is transmitted from the first planetary gear to the second planetary gear through the third planetary gear. A pitch circle diameter of the second planetary gear is smaller than a pitch circle diameter of the third planetary gear.

The planetary gear system of the present invention is preferred to further contain: a shaft rotatably supported by the planetary career; and a third planetary gear. The second planetary gear and the third planetary gear are coupled to the shaft. Torque is transmitted from the first planetary gear to the second planetary gear through the third planetary gear such that a direction of torque around the planetary career rotation axis, which is applied from the sun gear through the first planetary gear to the planetary career, is same as a direction of torque around the planetary career rotation axis, which is applied from the ring gear through the second planetary gear to the planetary career. The ring gear is an external gear.

It is preferred that torque is transmitted from an engine of a helicopter to the sun gear and torque is outputted from the planetary career to a main rotor of the helicopter.

According to the present invention, a planetary gear system that can attain a large reduction gear ratio while suppressing the increase in weight is provided.

### Brief Description of Drawings

The above object, other objects, advantages and features of the present invention will be more apparent from the descriptions of embodiments in conjunction with the attached drawings in which:
Fig. 1 shows a planetary gear system according to a first embodiment of the present invention;
Fig. 2A is a top view of a planetary gear system according to a first comparison example;
Fig. 2B is a side view of the planetary gear system according to the first comparison example;
Fig. 3A is a top view of a planetary gear system according to a second comparison example;
Fig. 3B is a side view of the planetary gear system according to the second comparison example;
Fig. 4A is a top view of a first variation example of the planetary gear system according to the first embodiment;
Fig. 4B is a side view of the first variation example of the planetary gear system according to the first embodiment;
Fig. 5A shows a second variation example of the planetary gear system according to the first embodiment;
Fig. 5B shows a third variation example of the planetary gear system according to the first embodiment;
Fig. 6 shows a planetary gear system according to a second embodiment of the present invention;
Fig. 7 is a top view of a planetary gear system according to a third embodiment of the present invention;
Fig. 8 is a side view of the planetary gear system according to the third embodiment;
Fig. 9 shows a first variation example of the planetary gear system according to the third embodiment;
Fig. 10 shows a second variation example of the planetary gear system according to the third embodiment;
Fig. 11 shows a third variation example of the planetary gear system according to the third embodiment;
Fig. 12 shows a fourth variation example of the planetary gear system according to the third embodiment;
Fig. 13 shows a fifth variation example of the planetary gear system according to the third embodiment;
Fig. 14 shows a sixth variation example of the planetary gear system according to the third embodiment;
Fig. 15 shows a seventh variation example of the planetary gear system according to the third embodiment;
Fig. 16 is a top view of a planetary gear system according to a fourth embodiment of the present invention;
Fig. 17 is a side view of the planetary gear system according to the fourth embodiment;
Fig. 18A is a top view of a planetary gear system according to a fifth embodiment of the present invention;
Fig. 18B is a side view of the planetary gear system according to the fifth embodiment; and
Fig. 19 shows a helicopter that contains the planetary gear system according to the embodiment of the present invention.

### Best Mode for Carrying Out the Invention

A planetary gear system according to embodiments of the present invention will be described below with reference to the attached drawings.

### (First Embodiment)

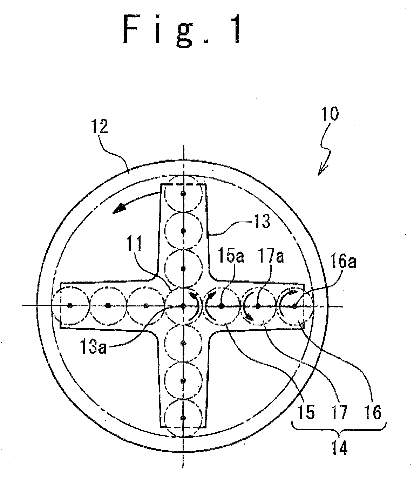

With reference to Fig. 1, a planetary gear system 10 according to the first embodiment of the present invention contains: a sun gear 11 serving as an input; a fixed ring gear 12; a planetary carrier 13 as an output; and gear units 14 supported by the planetary carrier 13. A rotation axis of the sun gear 11 and an axis of the ring gear 12 are arranged along the same straight line. The ring gear 12 is a cylindrical gear such as a spur gear or helical gear, and is an internal gear. The ring gear 12 is larger in pitch circle diameter than the sun gear 11. The gear unit 14 includes: a planetary gear 15 engaging the sun gear 11; a planetary gear 16 engaging the ring gear 12; and a planetary gear 17 engaging the planetary gear 15 and the planetary gear 16. The planetary gears 15 to 17 are arranged in the same plane. Each of the sun gear 11 and the planetary gears 15 to 17 is a cylindrical gear such as a spur gear or helical gear, and is an external gear. The planetary gear 16 is arranged inside the ring gear 12. The rotation axis of the sun gear 11 and a rotation axis 13a of the planetary carrier 13 are arranged along the same straight line. Each of the planetary gears 15 to 17 rotates (spins) with respect to the planetary carrier 13. A rotation axis 15a of the planetary gear 15, a rotation axis 16a of the planetary gear 16, a rotation axis 17a of the planetary gear 17, and the rotation axis 13a of the planetary carrier 13 are parallel. The rotation axis 15a is arranged closer to the rotation axis 13a (the rotation axis of the sun gear 11) than the rotation axis 16a.

When the sun gear 11 gives a driving force to the planetary gear 15 to cause the planetary gear 15 to spin, the planetary gear 15 causes the planetary gear 17 to spin, and the planetary gear 17 causes the planetary gear 16 to spin. At this time, since the planetary gear 16 kicks the ring gear 12, the planetary gear 16 receives a reaction force from the ring gear 12. As a result, the planetary carrier 13 rotates in the same direction as that of the sun gear 11, and the planetary gears 15 to 17 rotate (revolve) together with the planetary carrier 13.

Here, torque is transmitted from the planetary gear 15 through the planetary gear 17 to the planetary gear 16 such that the planetary gears 15 and 16 spins in the same direction. Thus, a direction of torque applied to the planetary carrier 13 through the planetary gear 15 from the sun gear 11 is same as a direction of torque applied to the planetary carrier 13 through the planetary gear 16 from the ring gear 12. Hence, a reduction gear ratio in the planetary gear system 10 is large. The reduction gear ratio in the planetary gear system 10 is determined by the pitch circle diameter of the sun gear 11 and the pitch circle diameter of the ring gear 12. Here, the torque applied to the planetary carrier 13 through the planetary gear 16 from the ring gear 12 is based on the above-mentioned reaction force.

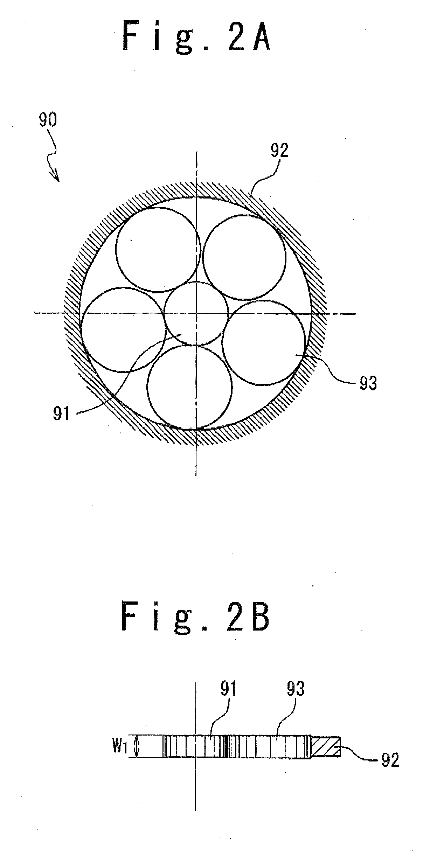

Advantages of the present embodiment will be described below with reference to Figs. 2A, 2B, 3A, 3B, 4A and 4B.

Fig. 2A shows a top view of a general planetary gear system 90. The planetary gear system 90 contains a sun gear 91, a ring gear 92, and planetary gears 93 each engaging the sun gear 91 and the ring gear 92. As shown in Fig. 2B, the common face width of the sun gear 91 and the planetary gear 93 is designated by W₁.

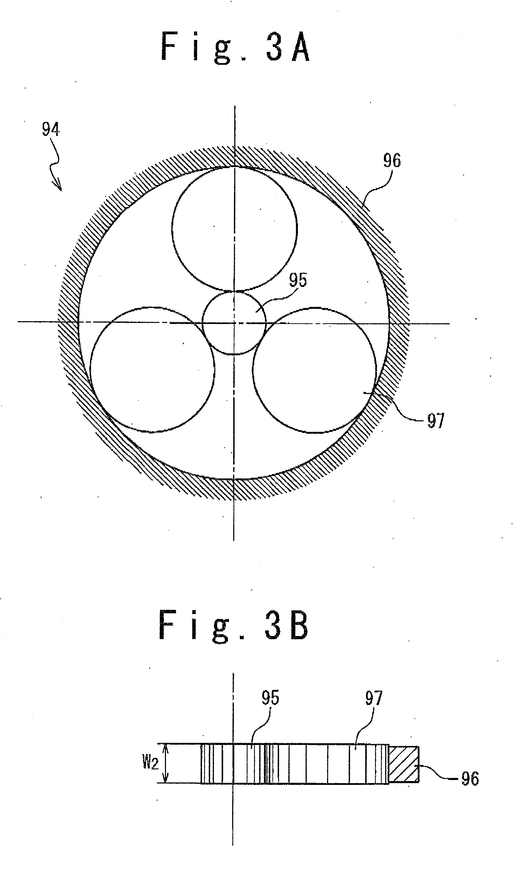

Fig. 3A shows a top view of a planetary gear system 94. The planetary gear system 94 contains a sun gear 95, a ring gear 96, and planetary gears 97 each engaging the sun gear 95 and the ring gear 96. Pitch circle diameters of the sun gear 95 and the sun gear 91 are equal, and the ring gear 96 is larger in pitch circle diameter than the ring gear 92. A diameter ratio (the pitch circle diameter of the ring gear 96/the pitch circle diameter of the sun gear 95) in the planetary gear system 94 is larger than a diameter ratio (the pitch circle diameter of the ring gear 92/the pitch circle diameter of the sun gear 91) in the planetary gear system 90. Thus, the planetary gear system 94 is larger in reduction gear ratio than the planetary gear system 90.

On the other hand, since a pitch circle diameter of the planetary gear 97 is required to match with a clearance between the sun gear 95 and the ring gear 96, the planetary gear 97 is required to be large. As a result, the number of the planetary gears 97 that can be contained by the planetary gear system 94 is smaller than the number of the planetary gears 93 that can be contained by the planetary gear system 90. When the total number of the planetary gears 97 is small, a tangential force applied to one planetary gear 97 is strong. Thus, the common face width W₂ of the sun gear 95 and the planetary gear 97, which is shown in Fig. 3B, is required to be larger than the face width W₁. The large face width W₂ results in the increased weight of the planetary gear system 94.

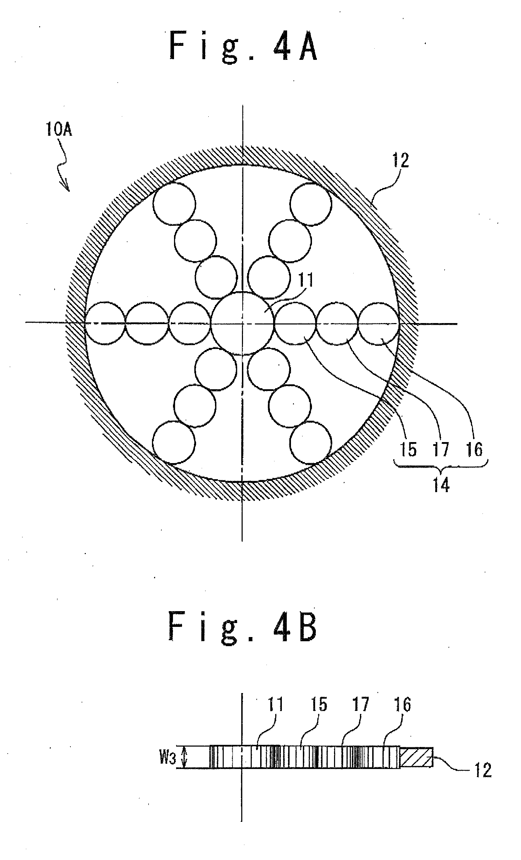

Fig. 4A shows a top view of a planetary gear system 10A according to a first variation example of the present embodiment. The planetary gear system 10A contains a sun gear 11, a ring gear 12, a planetary carrier 13 (not shown), and gear units 14 supported by the planetary carrier 13. The pitch circle diameters of the sun gear 11 and the sun gear 95 are equal, and the pitch circle diameters of the ring gear 12 and the ring gear 96 are equal. The gear unit 14 contains: a planetary gear 15 engaging the sun gear 11; and a planetary gear 16 engaging the ring gear 12. Torque is transmitted from the planetary gear 15 through a planetary gear 17 to the planetary gear 16. Since a role to engage the sun gear 11 and a role to engage the ring gear 12 are shared between the planetary gears 15 and 16, the planetary gear system 10A can contain a large number of gear units 14. Hence, it is possible to suppress the increase in the common face width W₃ of the sun gear 11 and the planetary gears 15 to 17, which is shown in Fig. 4B.

Thus, according to the present embodiment, it is possible to attain a large reduction gear ratio while suppressing the increase in weight of the planetary gear system.

In the present embodiment, the spin axes 15a, 16a and 17a of the planetary gears 15, 16 and 17, which are included in the same gear unit 14, are preferred to be arranged on the plane that includes the rotation axis 13a of the planetary carrier 13 (the rotation axis of the sun gear 11). Since the gear unit 14 connects the sun gear 11 with the ring gear 12 in the shortest distance, the gear unit 14 can be light.

In the present embodiment, torque may be transmitted from the planetary gear 15 to the planetary gear 16 through odd number (three or more) of planetary gears, instead of the planetary gear 17.

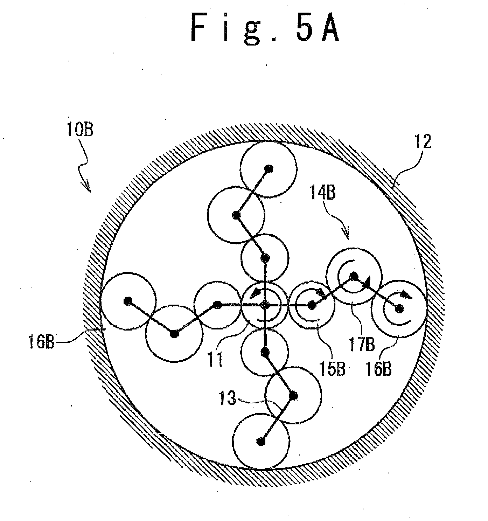

Fig. 5A shows a planetary gear system 10B according to a second variation example of the present embodiment. The planetary gear system 10B contains: a sun gear 11 as an input; a fixed ring gear 12; a planetary carrier 13 as an output; and gear units 14B supported by the planetary carrier 13. The gear unit 14B includes: a planetary gear 15B engaging the sun gear 11; a planetary gear 16B engaging the ring gear 12; and a planetary gear 17B engaging the planetary gear 15B and the planetary gear 16B. The planetary gears 15B to 17B are arranged in the same plane. The planetary gear 16B is arranged inside the ring gear 12. A spin axis of the planetary gear 15B is arranged closer to a rotation axis of the planetary carrier 13 (a rotation axis of the sun gear 11) than a spin axis of the planetary gear 16B. As shown in Fig. 5A, all of the spin axes of the planetary gears 15B to 17B may not be arranged on the plane that includes the rotation axis of the planetary carrier 13. Such arrangement may be required by a restriction on number of teeth with respect to the planetary gears 15B to 17B, or the like.

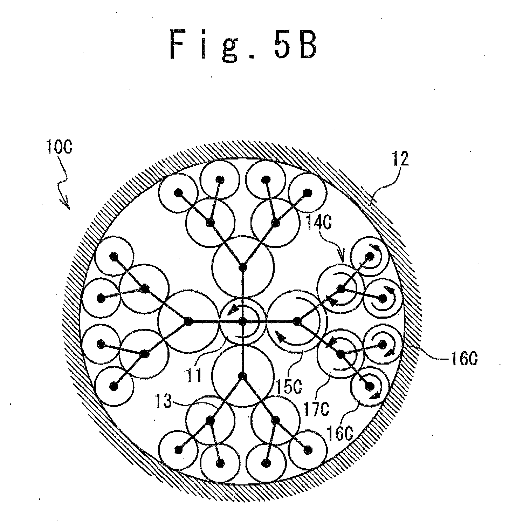

Fig. 5B shows a planetary gear system 10C according to a third variation example of the present embodiment. The planetary gear system 10C contains: a sun gear 11 as an input; a fixed ring gear 12; a planetary carrier 13 as an output; and gear units 14C supported by the planetary carrier 13. The gear unit 14C contains: a planetary gear 15C engaging the sun gear 11; a plurality of planetary gears 17C engaging the planetary gear 15C; and a plurality of planetary gears 16C provided correspondingly to each planetary gear 17C. The planetary gears 15C to 17C are arranged in the same plane. Each of the plurality of planetary gears 16C engages the corresponding planetary gear 17C and the ring gear 12. Each planetary gear 16C is arranged inside the ring gear 12. A spin axis of the planetary gear 15C is arranged closer to a rotation axis of the planetary carrier 13 (a rotation axis of the sun gear 11) than a spin axis of each planetary gear 16C. In the gear unit 14C, the transmission path of force between the sun gear 11 and the ring gear 12 is branched. Such branching reduces a force applied to the teeth of each of the ring gear 12 and the planetary gears 16C and 17C, and thus, the teeth are prevented from being damaged.

### (Second Embodiment)

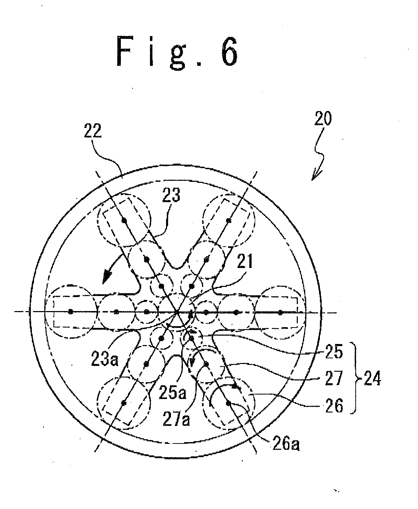

With reference to Fig. 6, a planetary gear system 20 according to a second embodiment of the present invention contains: a sun gear 21 as an input; a fixed ring gear 22; a planetary carrier 23 as an output; and gear units 24 supported by the planetary carrier 23. A rotation axis of the sun gear 21 and an axis of the ring gear 22 are arranged along the same straight line. The ring gear 22 is a cylindrical gear, such as a spur gear or helical gear, and is an internal gear. The ring gear 22 is larger in pitch circle diameter than the sun gear 21. The gear unit 24 includes: a planetary gear 25 engaging the sun gear 21; a planetary gear 26 engaging the ring gear 22; and a planetary gear 27 engaging the planetary gear 25 and the planetary gear 26. The planetary gears 25 to 27 are arranged in the same plane. The planetary gear 26 is arranged inside the ring gear 22. Each of the sun gear 21 and the planetary gears 25 to 27 is a cylindrical gear, such as a spur gear or helical gear, and is an external gear. The rotation axis of the sun gear 21 and a rotation axis 23a of the planetary carrier 23 are arranged along the same straight line. Each of the planetary gears 25 to 27 rotates (spins) with respect to the planetary carrier 23. A spin axis 25a of the planetary gear 25, a spin axis 26a of the planetary gear 26, a spin axis 27a of the planetary gear 27, and the rotation axis 23a of the planetary carrier 23 are parallel. The spin axis 25a is arranged closer to the rotation axis 23a (the rotation axis of the sun gear 21) than the spin axis 26a.

When the sun gear 21 gives a driving force to the planetary gear 25 to cause the planetary gear 25 to spin, the planetary gear 25 causes the planetary gear 27 to spin, and the planetary gear 27 causes the planetary gear 26 to spin. At this time, since the planetary gear 26 kicks the ring gear 22, the planetary gear 26 receives a reaction force from the ring gear 22. As a result, the planetary carrier 23 rotates in the same direction as that of the sun gear 21, and the planetary gears 25 to 27 rotate (revolve) together with the planetary carrier 23.

Here, torque is transmitted from the planetary gear 25 through the planetary gear 27 to the planetary gear 26 such that the planetary gears 25 and 26 rotate in the same direction. Thus, a direction of torque applied to the planetary carrier 23 through the planetary gear 25 from the sun gear 21 is same as a direction of torque applied to the planetary carrier 23 through the planetary gear 26 from the ring gear 22. Hence, a reduction gear ratio in the planetary gear system 20 is large. Here, the torque applied to the planetary carrier 23 through the planetary gear 26 from the ring gear 22 is based on the above-mentioned reaction force.

The planetary gear system 20 contains a plurality of gear units 24. The larger the number of the gear units 24 is, the smaller is the force applied to the teeth of each of the sun gear 21, the ring gear 22 and the planetary gears 25 to 27. Thus, the teeth are prevented from being damaged.

The planetary gears 26 and 27 are arranged outside the planetary gear 25. That is, the planetary gears 26 and 27 are arranged more remote from the sun gear 21 than the planetary gear 25. Since a pitch circle diameter of the planetary gear 25 is smaller than a pitch circle diameter of the planetary gear 27, it is easy to increase the number of the gear units 24. The smaller pitch circle diameter of the planetary gear 25 than a pitch circle diameter of the planetary gear 26 also makes it easier to increase the number of the gear units 24.

The planetary gear 26 is arranged outside the planetary gear 27. That is, the planetary gear 26 is arranged more remote from the sun gear 21 than the planetary gear 27. The smaller pitch circle diameter of the planetary gear 27 than the pitch circle diameter of the planetary gear 26 is preferable to increase the number of the gear units 24.

The easiness to increase the number of gear units 24 is apparent from the comparison between Fig. 1 and Fig. 6.

### (Third Embodiment)

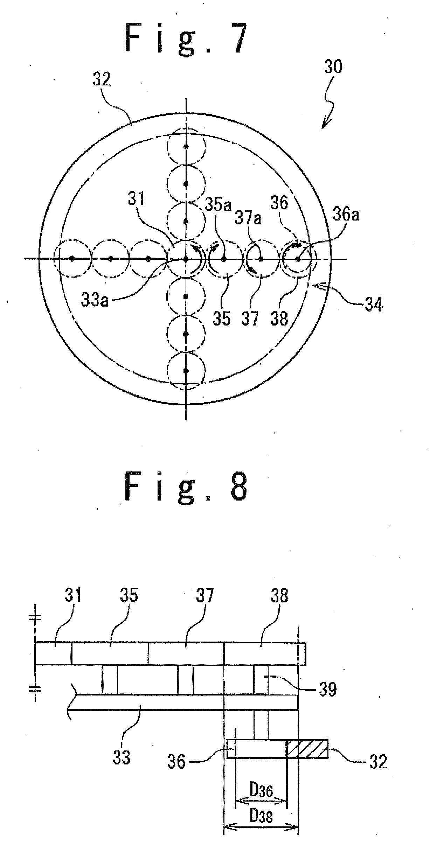

With reference to Fig. 7, a planetary gear system 30 according to a third embodiment of the present invention contains: a sun gear 31 as an input; a fixed ring gear 32; and gear units 34. The sun gear 31 and the ring gear 32 are arranged in different parallel planes such that a rotation axis of the sun gear 31 and an axis of the ring gear 32 are arranged along the same straight line. The ring gear 32 is a cylindrical gear, such as a spur gear or helical gear, and is an internal gear. The ring gear 32 is larger in pitch circle diameter than the sun gear 31. The gear unit 34 includes: a planetary gear 35 engaging the sun gear 31; a planetary gear 36 engaging the ring gear 32; a planetary gear 38 that rotates (spins) integrally with the planetary gear 36; and a planetary gear 37 engaging the planetary gear 35 and the planetary gear 38. Each of the sun gear 31 and the planetary gears 35 to 38 is a cylindrical gear, such as a spur gear or helical gear, and is an external gear. The planetary gear 36 is arranged inside the ring gear 32.

With reference to Fig. 8, the planetary gear system 30 contains a planetary carrier 33 as an output. The planetary carrier 33 supports the gear units 34. The rotation axis of the sun gear 31 and a rotation axis 33a of the planetary carrier 33 are arranged along the same straight line. Each of the planetary gears 35 to 38 rotates (spins) with respect to the planetary carrier 33. The planetary gear 36 and the planetary gear 38 are coupled to a shaft 39. The planetary carrier 33 supports the shaft 39 such that the shaft 39 can rotate (spin). The planetary carrier 33 is arranged between the planetary gears 35, 37 and 38; and the planetary gear 36. The planetary gears 35, 37 and 38 are arranged in a plane different from but parallel to a plane in which the planetary gear 36 is arranged.

A spin axis 35a of the planetary gear 35, a common spin axis 36a of the planetary gears 36 and 38, a spin axis 37a of the planetary gear 37, and a rotation axis 33a of the planetary carrier 33 are parallel. The spin axis 35a is arranged closer to the rotation axis 33a (the rotation axis of the sun gear 31) than the spin axis 36a.

When the sun gear 31 gives a driving force to the planetary gear 35 to cause the planetary gear 35 to spin, the planetary gear 35 causes the planetary gear 37 to spin, and the planetary gear 37 causes the planetary gear 38 to spin. When the planetary gear 38 spins, the planetary gear 36 also spins integrally with the planetary gear 38. At this time, since the planetary gear 36 kicks the ring gear 32, the planetary gear 36 receives a reaction force from the ring gear 32. As a result, the planetary carrier 33 rotates in the same direction as that of the sun gear 31, and the planetary gears 35 to 37 rotate (revolve) together with the planetary carrier 33.

Here, torque is transmitted from the planetary gear 35 through the planetary gear 37, the planetary gear 38 and the shaft 39 to the planetary gear 36 such that the planetary gears 35 and 36 spins in the same direction. Thus, a direction of torque applied to the planetary carrier 33 through the planetary gear 35 from the sun gear 31 is the same as a direction of torque applied to the planetary carrier 33 through the planetary gear 36 from the ring gear 32. Hence, a reduction gear ratio in the planetary gear system 30 is large. Here, the torque applied to the planetary carrier 33 through the planetary gear 36 from the ring gear 32 is based on the above-mentioned reaction force.

A smaller pitch circle diameter D₃₆ of the planetary gear 36 than a pitch circle diameter D₃₈ of the planetary gear 38 contributes to the increase in the reduction gear ratio in the planetary gear system 30.

Tooth dimensions of the planetary gears 36 and 38 can be different from each other.

Arbitrary number of pairs of planetary gears coupled by the shaft can be arranged at arbitrary positions of the gear unit.

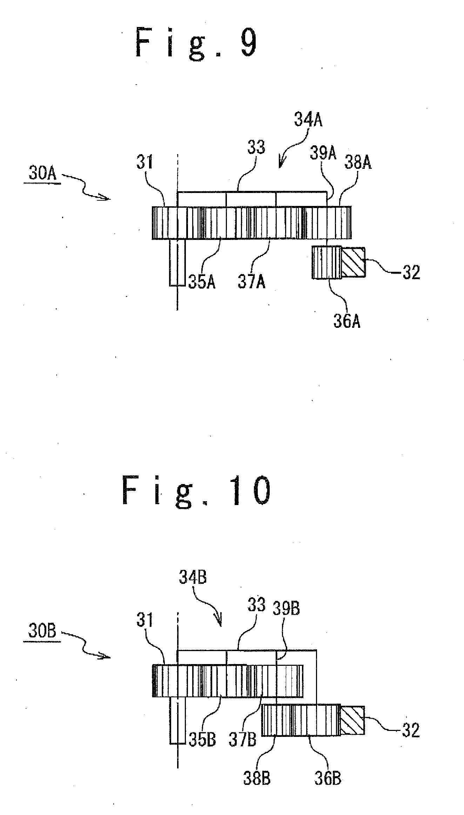

With reference to Fig. 9, a planetary gear system 30A according to a first variation example of the present embodiment contains: a sun gear 31 as an input; a fixed ring gear 32; a planetary carrier 33 as an output; and a gear unit 34A supported by the planetary carrier 33. The gear unit 34A includes: a planetary gear 35A engaging the sun gear 31; a planetary gear 36A engaging the ring gear 32; a planetary gear 38A that rotates (spins) integrally with the planetary gear 36A; and a planetary gear 37A engaging the planetary gear 35A and the planetary gear 38A. Each of the planetary gears 35A to 38A is a cylindrical gear and an external gear, and rotates (spins) with respect to the planetary carrier 33. The planetary gear 36A and the planetary gear 38A are coupled to a shaft 39A. The planetary gear 36A is smaller in pitch circle diameter than the planetary gear 38A. The planetary carrier 33 supports the shaft 39A such that the shaft 39A can rotate (spin). The planetary gears 35A to 38A are arranged on the same side of the planetary carrier 33. The planetary gears 35A, 37A and 38A are arranged a plane different from but parallel to a plane in which the planetary gear 36A is arranged. The planetary gear 36A is arranged inside the ring gear 32.

With reference to Fig. 10, a planetary gear system 30B according to a second variation example of the present embodiment contains: a sun gear 31 as an input; a fixed ring gear 32; a planetary carrier 33 as an output; and a gear unit 34B supported by the planetary carrier 33. The gear unit 34B includes: a planetary gear 35B engaging the sun gear 31; a planetary gear 36B engaging the ring gear 32; a planetary gear 37B engaging the planetary gear 35B; and a planetary gear 38B that rotates (spins) integrally with the planetary gear 37B and engages the planetary gear 36B. Each of the planetary gears 35B to 38B is a cylindrical gear and an external gear, and rotates (spins) with respect to the planetary carrier 33. The planetary gear 37B and the planetary gear 38B are coupled to a shaft 39B. The planetary gear 38B is smaller in pitch circle diameter than the planetary gear 37B. The planetary carrier 33 supports the shaft 39B such that the shaft 39B can rotate (spin). The planetary gears 35B and 37B are arranged in a plane different from but parallel to a plane in which the planetary gears 36B and 38B are arranged. The planetary gear 36B is arranged inside the ring gear 32.

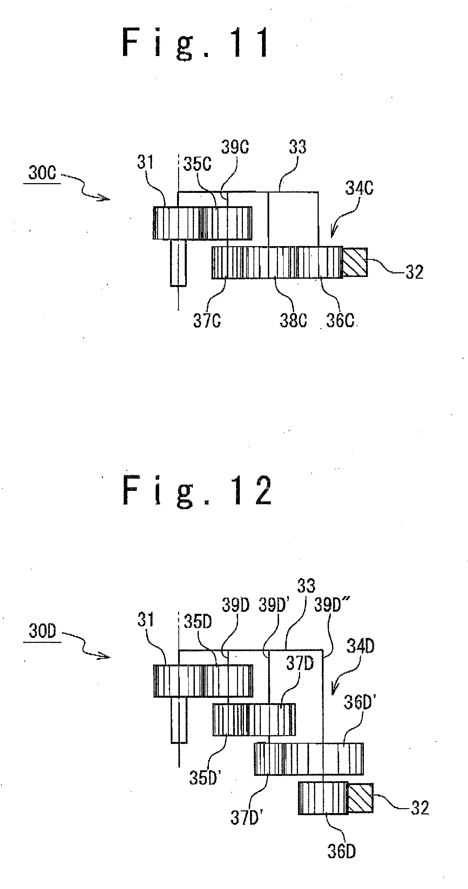

With reference to Fig. 11, a planetary gear system 30C according to a third variation example of the present embodiment contains: a sun gear 31 as an input; a fixed ring gear 32; a planetary carrier 33 as an output; and a gear unit 34C supported by the planetary carrier 33. The gear unit 34C includes: a planetary gear 35C engaging the sun gear 31; a planetary gear 36C engaging the ring gear 32; a planetary gear 37C that rotates (spins) integrally with the planetary gear 35C; and a planetary gear 38C engaging the planetary gear 37C and the planetary gear 36C. Each of the planetary gears 35C to 38C is a cylindrical gear and an external gear, and rotates (spins) with respect to the planetary carrier 33. The planetary gear 35C and the planetary gear 37C are coupled to a shaft 39C. The planetary gear 37C is smaller in pitch circle diameter than the planetary gear 35C. The planetary carrier 33 supports the shaft 39C such that the shaft 39C can rotate (spin). The planetary gear 35C is arranged in a plane different from but parallel to a plane in which the planetary gears 36C to 38C are arranged. The planetary gear 36C is arranged inside the ring gear 32.

With reference to Fig. 12, a planetary gear system 30D according to a fourth variation example of the present embodiment contains: a sun gear 31 as an input; a fixed ring gear 32; a planetary carrier 33 as an output; and a gear unit 34D supported by the planetary carrier 33. The gear unit 34D includes: a planetary gear 35D engaging the sun gear 31; a planetary gear 36D engaging the ring gear 32; a planetary gear 35D' that rotates (spins) integrally with the planetary gear 35D; a planetary gear 37D engaging the planetary gear 35D'; a planetary gear 37D' that rotates (spins) integrally with the planetary gear 37D; and a planetary gear 36D' that engages the planetary gear 37D' and rotates (spins) integrally with the planetary gear 36D. Each of the planetary gears 35D to 37D and 35D' to 37D' is a cylindrical gear and an external gear, and rotates (spins) with respect to the planetary carrier 33. The planetary gear 35D and the planetary gear 35D' are coupled to a shaft 39D. The planetary gear 37D and the planetary gear 37D' are coupled to a shaft 39D'. The planetary gear 36D and the planetary gear 36D' are coupled to a shaft 39D". The planetary gear 35D' is smaller in pitch circle diameter than the planetary gear 35D. The planetary gear 37D' is smaller in pitch circle diameter than the planetary gear 37D. The planetary gear 36D' is larger in pitch circle diameter than the planetary gear 36D. The planetary carrier 33 supports the shafts 39D to 39D" such that they can rotate (spin). The planetary gears 35D to 37D and 35D' to 37D' are arranged in different parallel planes, as shown in Fig. 12. The planetary gear 36D is arranged inside the ring gear 32.

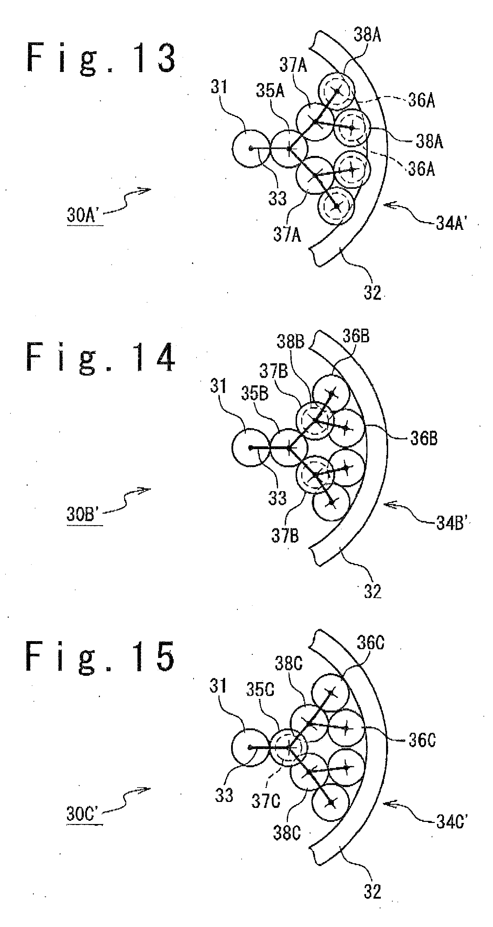

With reference to Fig. 13, a planetary gear system 30A' according to a fifth variation example of the present embodiment corresponds to the combination of the configuration of the planetary gear system 30A and the configuration of the planetary gear system 10C. The planetary gear system 30A' contains: a sun gear 31 as an input; a fixed ring gear 32; a planetary carrier 33 as an output; and a gear unit 34A' supported by the planetary carrier 33. The gear unit 34A' includes: a planetary gear 35A engaging the sun gear 31; a plurality of planetary gears 37A each engaging the planetary gear 35A; a plurality of planetary gears 38A provided correspondingly to each planetary gear 37A; and a planetary gear 36A provided correspondingly to each planetary gear 38A and engaging the ring gear 32. Each planetary gear 38A engages the corresponding planetary gear 37A and rotates (spins) integrally with the corresponding planetary gear 36A. Each of the planetary gears 35A to 38A is a cylindrical gear and an external gear, and rotates (spins) with respect to the planetary carrier 33. The planetary gear 36A and the planetary gear 38A are coupled to a shaft. The planetary carrier 33 supports the shaft such that the shaft can rotate (spin). The planetary gear 36A is smaller in pitch circle diameter than the planetary gear 38A. The planetary gears 35A, 37A and 38A are arranged in a plane different from but parallel to a plane in which the planetary gear 36A is arranged. Each planetary gear 36A is arranged inside the ring gear 32.

With reference to Fig. 14, a planetary gear system 30B' according to a sixth variation example of the present embodiment corresponds to the combination of the configuration of the planetary gear system 30B and the configuration of the planetary gear system 10C. The planetary gear system 30B' contains: a sun gear 31 as an input; a fixed ring gear 32; a planetary carrier 33 as an output; and a gear unit 34B' supported by the planetary carrier 33. The gear unit 34B' includes: a planetary gear 35B engaging the sun gear 31; a plurality of planetary gears 37B each engaging the planetary gear 35B; a planetary gear 38B provided correspondingly to each planetary gear 37; and a plurality of planetary gears 36B provided correspondingly to each planetary gear 38B. Each planetary gear 38B rotates (spins) integrally with the corresponding planetary gear 37. Each planetary gear 36B engages the corresponding planetary gear 38B and the ring gear 32. Each of the planetary gears 35B to 38B is a cylindrical gear and an external gear, and rotates (spins) with respect to the planetary carrier 33. The planetary gear 37B and the planetary gear 38B are coupled to a shaft. The planetary carrier 33 supports the shaft such that the shaft can rotate (spin). The planetary gear 38B is smaller in pitch circle diameter than the planetary gear 37B. The planetary gears 35B and 37B and are arranged in a plane different from but parallel to a plane in which the planetary gears 36B and 38B are arranged. Each planetary gear 36B is arranged inside the ring gear 32.

With reference to Fig. 15, a planetary gear system 30C' according to a seventh variation example of the present embodiment corresponds to the combination of the configuration of the planetary gear system 30C and the configuration of the planetary gear system 10C. The planetary gear system 30C' contains: a sun gear 31 as an input; a fixed ring gear 32; a planetary carrier 33 as an output; and a gear unit 34C' supported by the planetary carrier 33. The gear unit 34C' includes: a planetary gear 35C engaging the sun gear 31; a planetary gear 37C that rotates (spins) integrally with the planetary gear 35C; apluralityofplanetarygears38Cprovidedcorrespondingly to the planetary gear 37C; and a plurality of planetary gears 36C provided correspondingly to each planetary gear 38C. Each of the planetary gears 35C to 38C is a cylindrical gear and an external gear, and rotates (spins) with respect to the planetary carrier 33. The planetary gear 35C and the planetary gear 37C are coupled to a shaft. The planetary carrier 33 supports the shaft such that the shaft can rotate (spin). The planetary gear 37C is smaller in pitch circle diameter than the planetary gear 35C. Each planetary gear 38C engages the corresponding planetary gear 37C. Each planetary gear 36C engages the corresponding planetary gear 38C and the ring gear 32. Each of the planetary gears 35C to 38C is a cylindrical gear and an external gear, and rotates (spins) with respect to the planetary carrier 33. The planetary gear 35C is arranged in a plane different from but parallel to a plane in which the planetary gears 36C to 38C are arranged. Each planetary gear 36C is arranged inside the ring gear 32.

In the planetary gear systems 30A to 30D and 30A' to 30C', tooth dimensions of the two planetary gears coupled to the common shaft can be different from each other.

### (Fourth Embodiment)

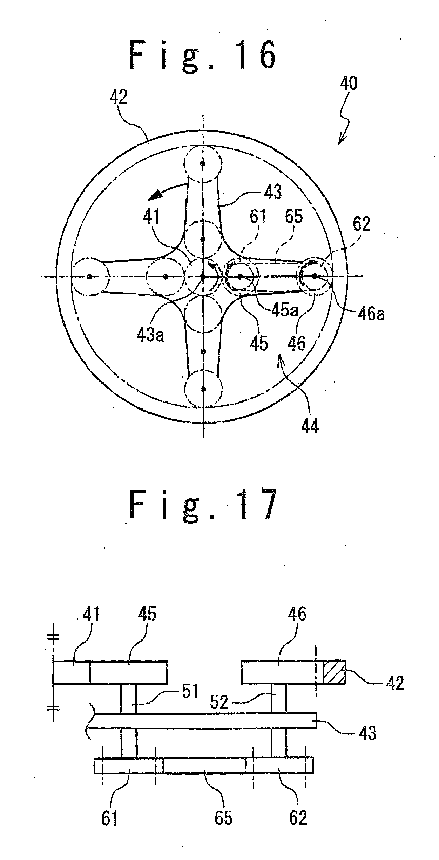

With reference to Fig. 16, a planetary gear system 40 according to a fourth embodiment of the present invention contains: a sun gear 41 as an input; a fixed ring gear 42; a planetary carrier 43 as an output; and gear units 44 supported by the planetary carrier 43. A rotation axis of the sun gear 41 and an axis of the ring gear 42 are arranged along the same straight line. The ring gear 42 is a cylindrical gear, such as a spur gear or helical gear, and is an internal gear. The ring gear 42 is larger in pitch circle diameter than the sun gear 41. The gear unit 44 includes: a planetary gear 45 engaging the sun gear 41; a planetary gear 46 engaging the ring gear 42; a sprocket 61, a sprocket 62; and a chain 65 engaging the sprocket 61 and the sprocket 62. Each of the sun gear 41 and the planetary gears 45 and 46 is a cylindrical gear, such as a spur gear or helical gear, and is an external gear. The planetary gear 46 is arranged inside the ring gear 42. The rotation axis of the sun gear 41 and a rotation axis 43a of the planetary carrier 43 are arranged along the same straight line.

With reference to Fig. 17, the planetary gear 45 and the sprocket 61 are coupled to a shaft 51, and the planetary gear 46 and the sprocket 62 are coupled to a shaft 52. The planetary carrier 43 supports the shafts 51 and 52 such that the shafts 51 and 52 can rotate. The planetary gear 45 and the sprocket 61 integrally rotate (spin) with respect to the planetary carrier 43. The planetary gear 46 and the sprocket 62 integrally rotate (spin) with respect to the planetary carrier 43.

A common spin axis 45a of the planetary gear 45 and the sprocket 61, a common spin axis 46a of the planetary gear 46 and the sprocket 62, and the rotation axis 43a of the planetary carrier 43 are parallel. The spin axis 45a is arranged closer to the rotation axis 43a (the rotation axis of the sun gear 41) than the spin axis 46a.

When the sun gear 41 gives a driving force to the planetary gear 45 to cause the planetary gear 45 to spin, the sprocket 61 spinning integrally with the planetary gear 45 causes the sprocket 62 to spin through the chain 65, and the planetary gear 46 also spins integrally with the sprocket 62. At this time, since the planetary gear 46 kicks the ring gear 42, the planetary gear 46 receives a reaction force from the ring gear 42. As a result, the planetary carrier 43 rotates in the same direction as that of the sun gear 41, and thus, the planetary gear 45, the planetary gear 46, the sprocket 61 and the sprocket 62 rotate (revolve) together with the planetary carrier 43.

Here, torque is transmitted from the planetary gear 45 through the shaft 51, the sprocket 61, the chain 65, the sprocket 62 and the shaft 52 to the planetary gear 46 such that the planetary gears 45 and 46 rotate in the same direction. Thus, a direction of torque applied to the planetary carrier 43 through the planetary gear 45 from the sun gear 41 is the same as a direction of torque applied to the planetary carrier 43 through the planetary gear 46 from the ring gear 42. For this reason, a reduction gear ratio in the planetary gear system 40 is large. Here, the torque applied to the planetary carrier 43 through the planetary gear 46 from the ring gear 42 is based on the above-mentioned reaction force.

The planetary gear system 40 contains a plurality of gear units 44. The larger the number of the gear units 44 is, the weaker is the force applied to the teeth of each of the sun gear 41, the ring gear 42, the planetary gears 45, 46, and the sprockets 61, 62.

Tooth dimensions of the planetary gears 45 and 46 can be different from each other.

### (Fifth Embodiment)

As described in the above embodiments, it is preferable, in order to make the reduction gear ratio larger, that the planetary gear engaging the ring gear is arranged inside the ring gear. However, even when the arrangement of the planetary gear and the ring gear is reversed, it is possible to make the reduction gear ratio larger to some extent.

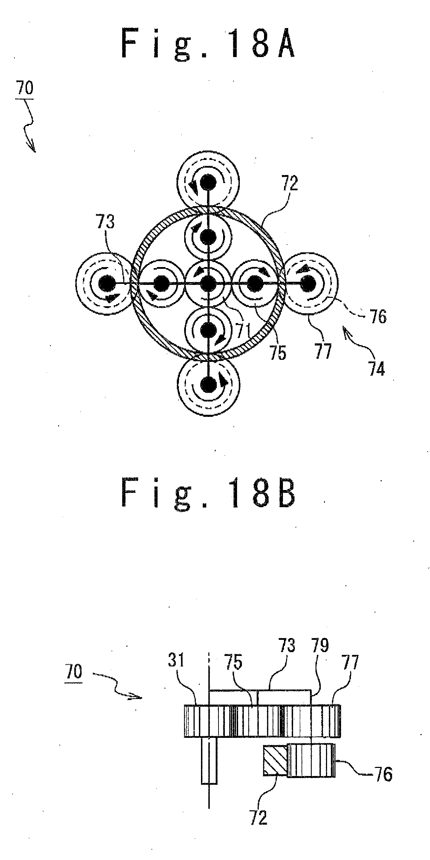

With reference to Fig. 18A, a planetary gear system 70 according to a fifth embodiment of the present invention contains: a sun gear 71 as an input; a fixed ring gear 72; a planetary carrier 73 as an output; and gear units 74 supported by the planetary carrier 73. The sun gear 71 and the ring gear 72 are arranged in different parallel planes such that a rotation axis of the sun gear 71 and an axis of the ring gear 72 are arranged along the same straight line. The ring gear 72 is a cylindrical gear, such as a spur gear or helical gear, and is an external gear. The ring gear 72 is larger in pitch circle diameter than the sun gear 71. The gear unit 74 includes : a planetary gear 75 engaging the sun gear 71; a planetary gear 76 engaging the ring gear 72; and a planetary gear 77 that engages the planetary gear 75 and rotates (spins) integrally with the planetary gear 76. The planetary gear 76 is arranged outside the ring gear 72. Each of the sun gear 71 and the planetary gears 75 to 77 is a cylindrical gear, such as a spur gear or helical gear, and is an external gear. The rotation axis of the sun gear 71 and a rotation axis of the planetary carrier 73 are arranged along the same straight line. The planetary gear 75 rotates (spins) with respect to the planetary carrier 73. The planetary gear 76 and the planetary gear 77 integrally rotates (spins) with respect to the planetary carrier 73. A spin axis of the planetary gear 75, a common spin axis of the planetary gears 76 and 77, and the rotation axis of the planetary carrier 73 are parallel. The spin axis of the planetary gear 75 is arranged closer to the rotation axis of the planetary carrier 73 (the rotation axis of the sun gear 71) than the common spin axis of the planetary gear 76 and the planetary gear 77.

With reference to Fig. 18B, the planetary gear 76 and the planetary gear 77 are coupled to a shaft 79. The planetary gear 76 is smaller in pitch circle diameter than the planetary gear 77. The planetary carrier 73 supports the shaft 79 such that the shaft 79 can rotate (spin). The planetary gears 75 and 77 are arranged in a plane different from but parallel to a plane in which the planetary gear 76 is arranged.

When the sun gear 71 gives a driving force to the planetary gear 75 to cause the planetary gear 75 to spin, the planetary gear 75 causes the planetary gear 77 to spin. When the planetary gear 77 spins, the planetary gear 76 also spins integrally with the planetary gear 77. At this time, since the planetary gear 76 kicks the ring gear 72, the planetary gear 76 receives a reaction force from the ring gear 72. As a result, the planetary carrier 73 rotates in the same direction as that of the sun gear 71, and the planetary gears 75 to 77 rotate (revolve) together with the planetary carrier 73.

Here, torque is transmitted from the planetary gear 75 through the planetary gear 77 and the shaft 79 to the planetary gear 76 such that the planetary gears 75 and 76 spin in the directions opposite to each other. Since the ring gear 72 is an external gear, a direction of torque applied to the planetary carrier 73 through the planetary gear 75 from the sun gear 71 is the same as a direction of torque applied to the planetary carrier 73 through the planetary gear 76 from the ring gear 72. For this reason, a reduction gear ratio in the planetary gear system 70 is large. Here, the torque applied to the planetary carrier 73 through the planetary gear 76 from the ring gear 72 is based on the above-mentioned reaction force.

Tooth dimensions of the planetary gears 76 and 77 can be different from each other.

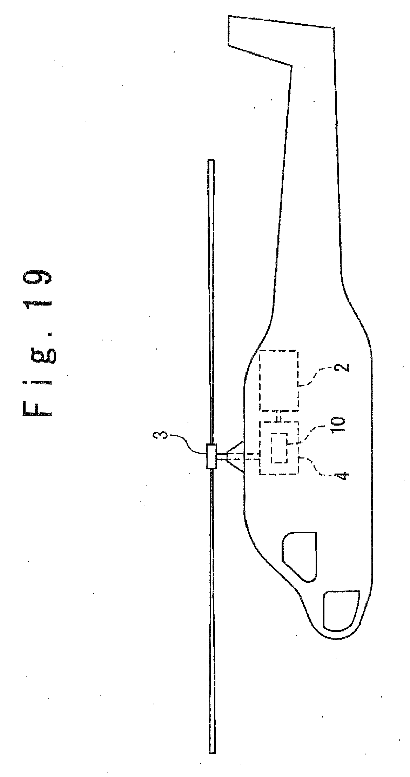

Fig. 19 shows a helicopter that contains the planetary gear system 10. The helicopter contains an engine 2, a main rotor 3, and a transmission 4 for transmitting power (torque) from the engine 2 to the main rotor 3. The transmission 4 contains the planetary gear system 10. The planetary gear system 10 is housed in a housing (not shown) of the transmission 4. The housing of the transmission 4 supports the sun gear 11 and the planetary carrier 13 such that they can rotate. The ring gear 12 is fixed to the housing of the transmission 4. The sun gear 11 is mechanically connected to an output shaft of the engine 2. The planetary career is mechanically connected to the main rotor 3. Power (torque) is transmitted from the engine 2 to the ring gear 12, and power (torque) is outputted from the planetary carrier 13 to the main rotor 3.

The helicopter may contain any of the above-mentioned planetary gear systems, instead of the planetary gear system 10.

The above-mentioned points can be combined. Also, it is possible that a bevel gear is used as the planetary gear and the spin axis of the planetary gear is inclined with respect to the rotation axis (revolution axis) of the planetary carrier.

As common advantages of the planetary gear systems according to the above-mentioned embodiments, the following points are provided. Since a role to engage the sun gear and a role to engage the ring gear are shared between the different planetary gears, the planetary gear system can contain the large number of gear units. Hence, it is possible to attain a large reduction gear ratio while suppressing the increase in weight of the planetary gear system.

Therefore, the planetary gear systems according to the above-mentioned embodiments are preferable for transporting means for which weight saving is demanded, and are especially preferable for a helicopter.

As mentioned above, the present invention has been described by referring to the embodiments. However, the present invention is not limited to the above-mentioned embodiments. Various modifications can be applied to the above-mentioned embodiments.

This application is based upon and claims the benefit of priority from Japanese Patent Application NO. 2008-37620, filed on February 19, 2008, the disclosure of which is incorporated herein its entirely by reference.

## Claims

1. A planetary gear system comprising:
a sun gear as an input;
a fixed ring gear;
a planetary career as an output;
a first planetary gear supported by said planetary career and engaging said sun gear; and
a second planetary gear supported by said planetary career and engaging said ring gear,
wherein a first spin axis of said first planetary gear is arranged closer to a planetary career rotation axis of said planetary career than a second spin axis of said second planetary gear, and
torque is transmitted from said first planetary gear to said second planetary gear.

2. The planetary gear system according to claim 1, wherein torque is transmitted from said first planetary gear to said second planetary gear such that a direction of torque around said planetary career rotation axis, which is applied from said sun gear through said first planetary gear to said planetary career, is same as a direction of torque around said planetary career rotation axis, which is applied from said ring gear through said second planetary gear to said planetary career, and
said ring gear is an internal gear.

3. The planetary gear system according to claim 2, further comprising a third planetary gear supported by said planetary career and engaging said first planetary gear and said second planetary gear.

4. The planetary gear system according to claim 3, wherein a pitch circle diameter of said first planetary gear is smaller than a pitch circle diameter of said third planetary gear.

5. The planetary gear system according to claim 3 or 4, wherein a pitch circle diameter of said first planetary gear is smaller than a pitch circle diameter of said second planetary gear.

6. The planetary gear system according to any of claims 3 to 5, wherein a third spin axis of said third planetary gear, said first spin axis, said second spin axis, and a sun gear rotation axis of said sun gear are arranged in an same plane, and
a center axis of said ring gear is arranged coaxially with said sun gear rotation axis.

7. The planetary gear system according to any of claims 2 to 5, further comprising a fourth planetary gear supported by said planetary career and engaging said ring gear,
wherein torque is transmitted from said first planetary gear to said fourth planetary gear.

8. The planetary gear system according to claim 2, further comprising:
a shaft rotatably supported by said planetary career; and
a third planetary gear,
wherein said second planetary gear and said third planetary gear are coupled to said shaft,
torque is transmitted from said first planetary gear to said second planetary gear through said third planetary gear, and
a pitch circle diameter of said second planetary gear is smaller than a pitch circle diameter of said third planetary gear.

9. The planetary gear system according to claim 2, further comprising:
a shaft rotatably supported by said planetary career; and
a third planetary gear,
wherein said first planetary gear and said third planetary gear are coupled to said shaft,
torque is transmitted from said first planetary gear to said second planetary gear through said third planetary gear, and
a pitch circle diameter of said third planetary gear is smaller than a pitch circle diameter of said first planetary gear.

10. The planetary gear system according to claim 2, further comprising:
a shaft rotatably supported by said planetary career;
a third planetary gear coupled to said shaft; and
a fourth planetary gear coupled to said shaft,
wherein torque is transmitted from said first planetary gear to said second planetary gear through said third planetary gear and said fourth planetary gear in a order of said third planetary gear and said fourth planetary gear, and
a pitch circle diameter of said fourth planetary gear is smaller than a pitch circle diameter of said third planetary gear.

11. The planetary gear system according to claim 1, further comprising a third planetary gear supported by said planetary career and engaging said first planetary gear,
wherein torque is transmitted from said first planetary gear to said second planetary gear through said third planetary gear,
a pitch circle diameter of said first planetary gear is smaller than a pitch circle diameter of said third planetary gear.

12. The planetary gear system according to claim 1, further comprising:
a shaft rotatably supported by said planetary career; and
a third planetary gear,
wherein said second planetary gear and said third planetary gear are coupled to said shaft,
torque is transmitted from said first planetary gear to said second planetary gear through said third planetary gear, and
a pitch circle diameter of said second planetary gear is smaller than a pitch circle diameter of said third planetary gear.

13. The planetary gear system according to claim 1, further comprising:
a shaft rotatably supported by said planetary career; and
a third planetary gear,
wherein said second planetary gear and said third planetary gear are coupled to said shaft,
torque is transmitted from said first planetary gear to said second planetary gear through said third planetary gear such that a direction of torque around said planetary career rotation axis, which is applied from said sun gear through said first planetary gear to said planetary career, is same as a direction of torque around said planetary career rotation axis, which is applied from said ring gear through said second planetary gear to said planetary career, and
said ring gear is an external gear.

14. The planetary gear system according to any of claims 1 to 13, wherein torque is transmitted from an engine of a helicopter to said sun gear, and
torque is outputted from said planetary career to a main rotor of said helicopter.
